(19) Europäisches Patentamt
European Patent Office
Office européen des brevets

(11) EP 1 972 652 A1

(12) EUROPEAN PATENT APPLICATION
published in accordance with Art. 158(3) EPC

(43) Date of publication:
24.09.2008 Bulletin 2008/39

(21) Application number: 06843223.6

(22) Date of filing: 26.12.2006

(51) Int Cl.:
*C08J 9/12* (2006.01) *C08L 69/00* (2006.01)

(86) International application number:
PCT/JP2006/325839

(87) International publication number:
WO 2007/074799 (05.07.2007 Gazette 2007/27)

(84) Designated Contracting States:
DE GB NL

(30) Priority: 26.12.2005 JP 2005372276

(71) Applicant: The Furukawa Electric Co., Ltd.
Chiyoda-ku
Tokyo 100-8322 (JP)

(72) Inventors:
- TOMOMATSU, Isao
Tokyo 1008322 (JP)
- ITOH, Masayasu
Tokyo 1008322 (JP)

(74) Representative: Grünecker, Kinkeldey,
Stockmair & Schwanhäusser
Anwaltssozietät
Leopoldstrasse 4
80802 München (DE)

# (54) POLYCARBONATE FOAM

(57) A polycarbonate foam was provided that is a thermoplastic resin foam suitable for a backlight or a lighting box of an electric signboard, a luminaire, a display, and the like, has both high optical reflectivity and shape-retaining property, and has a short production cycle time.

A polycarbonate foam contains a polycarbonate (A) and a fluorinated polycarbonate (B) and has a plurality of pores with a mean bubble diameter of 10 micrometers or less within. The foam is manufactured by a manufacturing method including a step of holding a resin sheet containing the polycarbonate (A) and the fluorinated polycarbonate (B) in a pressurized inert gas atmosphere and incorporating the inert gas into the resin sheet, and a step of heating the resin sheet incorporated with the inert gas to a temperature equal to or higher than a softening temperature of the polycarbonate under ambient pressure and foaming the resin sheet.

EP 1 972 652 A1

## Description

### TECHNICAL FIELD

The present invention relates to thermoplastic resin foam. More specifically, the present invention relates to polycarbonate foam having fine pores with a mean bubble diameter of 10 micrometers or less within. The polycarbonate foam achieved by the present invention has excellent manufacturability and high optical reflectivity. Therefore, the polycarbonate foam can be suitably used in a backlight or a lighting box of an electric signboard, a luminaire, a display, and the like.

### BACKGROUND ART

Conventionally, as a light reflector used in a backlight of an electric signboard, a luminaire, a display, and the like, a light reflector is proposed that is a light-reflective synthetic resin film or sheet processed into a three-dimensional shape (refer to, for example, Patent Literature 1).

As the above-described light-reflective synthetic resin film or sheet, a thermoplastic resin foam film or sheet having numerous fine bubbles or pores within is known (refer to, for example, Patent Literature 2). A thermoplastic resin film or sheet containing fillers in which numerous voids are formed in the film with the fillers serving as cores is also known (refer to, for example, Patent Literature 3).

The former thermoplastic resin foam having numerous fine bubbles or pores within is obtained as follows. After a thermoplastic resin that is in a molten state or a solid state is placed into contact with inert gas under pressure, depressurization is performed. The thermoplastic is heated to a temperature equal to or higher than a softening temperature of the resin under ambient pressure and foamed. The obtained thermoplastic resin foam film or sheet has a fine mean bubble diameter of 50 micrometers or less. Therefore, the thermoplastic resin foam film or sheet has high optical reflectivity. Moreover, the thermoplastic resin foam film or sheet can have a thickness of 200 micrometers or more. Therefore, the thermoplastic resin film or sheet has a superior shape-retaining property. The thermoplastic resin foam film or sheet can be processed into a three-dimensional shape by itself. The optical reflectivity of the thermoplastic resin foam film or sheet generally tends to increase as a number of bubbles per unit volume increases. At this time, a larger number of bubbles can be included per unit volume of the resin if a bubble diameter is reduced. Therefore, high optical reflectivity can be achieved. As a result, the film or sheet can be made thinner. Thus, a thermoplastic resin foam film or sheet having a large number of finer bubbles or pores is desired.

At the same time, the latter thermoplastic resin film containing the fillers is obtained as follows. An unstretched film containing fillers, such as calcium carbonate or barium sulfate is formed. The unstretched film is stretched, thus forming numerous voids with the fillers serving as cores. However, because a stretching process is performed, a thickness of the obtained film becomes thin, at less than 200 micrometers. The film does not have a shape-retaining property by itself and an amount of light leaking from a back surface of the film increases. Therefore, the thermoplastic resin film containing the fillers is used with a plate having sufficient strength and light-blocking property disposed on a back surface of the film.

Patent Literature 1: Japanese Patent Laid-open Publication No. 2002-122863
Patent Literature 2: WO97/01117
Patent Literature 3: Japanese Patent Laid-open Publication No. Heisei 4-296819

### DISCLOSURE OF INVENTION

### PROBLEM TO BE SOLVED BY THE INVENTION

In recent years, there has been a demand for increased energy efficiency. A resin film or sheet having higher optical reflectivity is demanded. Moreover, particularly in the field of electric signboards and displays, there is increasing need for space-saving. Resin films or sheets that reflect light are required to become thinner.

At the same time, polyethylene terephthalate is primarily used as a material for a light reflector used in a liquid crystal display television that is already being put to practical use. However, an inert gas permeation speed of polyethylene terephthalate is slow, about half that of polycarbonate. To improve production cycle time, a high-optical reflectivity light reflector using polycarbonate as a material is desired.

In manufacturing of the thermoplastic resin film containing fillers such as that described in Patent Literature 3, inert gas permeation time is not required. However, only a thin film can be manufactured because of the stretching procedure. A sheet having a shape-retaining property cannot be achieved.

The present invention has been achieved in light of the above-described issues. An object of the present invention is to provide a polycarbonate foam that has both high optical reflectivity and a shape-retaining property, and has a short production cycle time.

MEANS FOR SOLVING PROBLEM

As a result of keen deliberations to solve the above-described issues, the inventors of the present invention have found the following. Through a certain thermoplastic resin being added to a polycarbonate and the polycarbonate being foamed, a polycarbonate foam having fine pores with a pore diameter of 10 micrometers or less within can be obtained. More specifically, when a fluorinated polycarbonate is added to a polycarbonate, the fluorinated polycarbonate is finely dispersed within the polycarbonate. The fluorinated polycarbonate becomes a starting point for bubble nucleation formation, having a significant advantageous effect on the formation of finer bubbles.

The present invention was achieved based on the above-described knowledge and provides a polycarbonate foam described below in (1) to (5):

(1) the polycarbonate foam is a resin sheet containing a polycarbonate (A) and a fluorinated polycarbonate (B) and has a plurality of pores with a mean bubble diameter of 10 micrometers within;

(2) the polycarbonate foam in (1), in which the fluorinated polycarbonate (B) is that in which a portion of or all hydrogen atoms of a polycarbonate is replaced with fluorine atoms;

(3) the polycarbonate foam in (1) or (2), in which structures of the polycarbonate (A) and the fluorinated polycarbonate (B) are a same structure aside from a difference between the hydrogen atoms and fluorine atoms;

(4) the polycarbonate foam in any one of (1) to (3), in which 0.1 to 10 parts by mass of fluorinated polycarbonate (B) is added to 100 parts by mass of polycarbonate (A); and

(5) the polycarbonate foam in any one of (1) to (4), in which the polycarbonate foam is manufactured by a manufacturing method including a step of holding the resin sheet containing the polycarbonate (A) and the fluorinated polycarbonate (B) in a pressurized inert gas atmosphere and incorporating the inert gas into the resin sheet, and a step of heating the resin sheet incorporated with the inert gas under ambient pressure and foaming the resin sheet.

EFFECT OF THE INVENTION

In the polycarbonate foam of the present invention, a mean bubble diameter is fine, at 10 micrometers or less. Therefore, optical reflectivity is high, shape-retaining property is excellent, and a sheet can be made thin. The polycarbonate foam can be suitably used as a light reflector and a production cycle time is short.

BRIEF DESCRIPTION OF DRAWINGS

Fig. 1 is a cross-sectional view of a light reflector formed according to an example of the present invention.

EXPLANATIONS OF LETTERS OR NUMERALS

BEST MODE(S) FOR CARRYING OUT THE INVENTION

The present invention will be described in further detail below. A polycarbonate (A) used in the present invention is not particularly limited. A single type of polycarbonate can be used. Alternatively, two or more polycarbonates of different kinds or model numbers can be used in combination.

A fluorinated polycarbonate (B) used in the present invention is also not particularly limited. The fluorinated polycarbonate (B) can be a completely fluorinated polycarbonate in which all hydrogen atoms within a polycarbonate structure is replaced with fluorine atoms. Alternatively, the fluorinated polycarbonate (B) can be a partially fluorinated polycarbonate in which only a portion of the hydrogen atoms are replaced with the fluorine atoms. A backbone structure of the polycarbonate is not limited. However, to improve compatibility with the polycarbonate (A), structures of the polycarbonate (A) and the fluorinated polycarbonate (B) are more preferably a same structure aside from the difference between hydrogen atoms and fluorine atoms.

Optical reflectivity of a thermoplastic resin foam film or sheet generally tends to indicate a higher value when a number of bubbles per unit volume increases. At this time, high optical reflectivity can be achieved because a larger number of bubbles per unit volume of plastic can be contained when a bubble diameter is reduced. Therefore, the bubbles are preferably fine. Taking weight-reducing effects into consideration, a specific gravity of an obtained polycarbonate foam is preferably 0. 7 or less, and more preferably 0. 5 or less. A specific gravity of the light reflector is preferably 0.05 or more.

In the present invention, an added amount of fluorinated polycarbonate (B) to 100 parts by mass of polycarbonate (A) is not particularly limited. However, it is preferably 0.1 to 10 parts by mass, and more preferably 0.5 to 5 parts by mass. When the added amount of fluorinated polycarbonate is less than 0.1 parts by mass, the bubble diameter of the obtained foam tends to increase. Dispersion also tends to be uneven. At the same time, when the added amount of fluorinated polycarbonate exceeds 10 parts by mass, it is disadvantageous in terms of cost.

In the present invention, various additives can be mixed with the polycarbonate before being foamed, within a range that does not affect characteristics. The various additives are, for example, crystal nucleating agents, crystallization accelerators, foam nucleating agents, anti-oxidants, antistatic agents, anti-ultraviolet agents, light stabilizers, fluorescent brighteners, pigments, dyes, compatibilizers, lubricants, reinforcements, flame retardants, cross-linking agents, coagents, plasticizers, thickeners, and wetting agents. Alternatively, a resin containing the above-described additives can be layered onto the obtained polycarbonate foam, or the obtained polycarbonate foam can be coated with a coating material containing the above-described additives.

A method for manufacturing the polycarbonate of the present invention is not particularly limited. However, taking mass production into consideration, a method such as that described below is preferably used. In other words, a resin sheet made of a resin composition containing the polycarbonate (A) and the fluorinated polycarbonate (B) is formed. The resin sheet and a separator are layered and rolled to form a roll. The roll is held in a pressurized inert gas atmosphere. The inert gas is incorporated into the resin sheet. The resin sheet incorporating the inert gas is then heated to a temperature equal to or higher than a softening temperature of the polycarbonate under ambient pressure and foamed. This method is preferably used.

As the above-mentioned inert gas, helium, nitrogen, carbon dioxide, argon, and the like can be given. An inert gas permeation duration and an inert gas permeation amount required until the resin sheet is in a saturated state differ depending on the type of resin that is foamed, the type of inert gas, permeation pressure, and thickness of the sheet. Taking permeability of gas into the resin (speed and solubility) into consideration, carbon dioxide is more preferable.

In the present invention, the fluorinated polycarbonate (B) is combined with high affinity with the polycarbonate (A) having a similar structure. Therefore, the fluorinated polycarbonate (B) is evenly and finely dispersed within the polycarbonate (A). The finely dispersed fluorinated polycarbonate has an effect of either becoming a starting point for bubble nucleation during foaming, or finely foaming and the like. Therefore, when the resin sheet in which the fluorinated polycarbonate (B) is evenly and finely dispersed within the polycarbonate (A) is foamed, fine pores with a mean bubble diameter of 10 micrometers or less are evenly present within. A foam with high optical reflectivity can be obtained.

Examples

The present invention will be described below by examples. Measurements and evaluation of various characteristics of the obtained polycarbonate foam are as follows.

(Specific gravity)

A specific gravity (pf) of a foam sheet was measured by an underwater replacement method.

(Expansion ratio)

An expansion ratio was calculated as a ratio ps/pf of the specific gravity (pf) of the foam sheet and a specific gravity of the resin before foaming (ρs). ρs was calculated as 1.20.

(Mean bubble diameter)

A mean bubble diameter was determined in accordance with ASTM D3576-77. In other words, a scanning electron microscopy (SEM) photograph was taken of a cross-section of the sheet. Straight lines were drawn on the SEM photograph in a horizontal direction and a vertical direction. A length t of a chord of a bubble through which the straight lines pass was averaged. A magnification of the photograph, M, was assigned to an expression below and a mean bubble diameter d was determined.

$$d=t/(0.616\times M)$$

(Reflectivity)

Reflectivity at a wavelength of 55 nanometers was measured through use of a spectrophotometer (UV-3101PC: manufactured by Shimadzu Corporation). In Table 1, relative values of dispersion reflectivity of each resin foam are shown, with a dispersion reflectance of a white board that is solidified finely-powdered barium sulfate at 100%.

(Shape-retaining property)

A hemispherical light reflector having an opening section with a diameter of 100 nanometers and a depth of 70 nanometers, as shown in Fig. 1, was processed by thermal formation by a vacuum forming machine using the obtained polycarbonate foam. The obtained light reflector was manually held, and force was applied to the light reflector. Whether the light reflector deformed was observed, and a shape-retaining property was evaluated.

(Example 1)

After 1 part by mass of fluorinated polycarbonate having a structure shown in Formula (1) below was added to 100 parts by mass of polycarbonate (grade: L1250, manufactured by Teijin Chemicals Limited) and mixed, a sheet having a thickness of 0.5 mm, a width of 300 millimeters, and a length of 60 meters was formed. The resin sheet and a separator made of an olefin-series nonwoven fabric (grade: FT300, manufactured by Japan Vilene Company Limited) were layered. The separator has a thickness of 160 micrometers, a width of 290 millimeters, a length of 60 meters, and a mass per unit area of $55g/m^2$. The resin sheet and separator were rolled into a roll shape such that surfaces of the resin sheet were not in contact with each other at any portion.

Formula 1

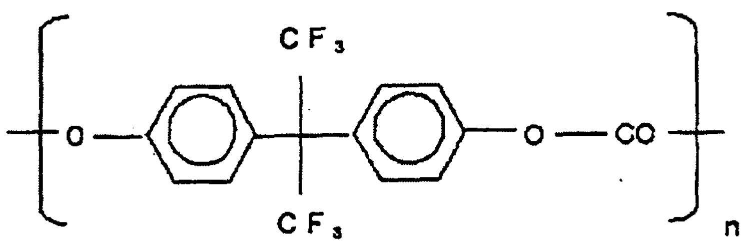

··· (1)

Then, the roll was placed in a pressure vessel and pressurized to 6MPa with carbon dioxide gas. The resin sheet was permeated with the carbon dioxide gas. The permeation duration of the carbon dioxide gas into the resin sheet was 24 hours. Next, the roll was removed from the pressure vessel. While removing the separator, only the resin sheet was continuously fed to a circulating-hot-air foam oven set to 130°C such that foaming time is one minute and foamed.

The obtained foam was evenly foamed. The mean bubble diameter was very fine, at 0.7 micrometers. The thickness of the foam was 0.8 millimeters. The reflectivity of the foam sheet was a high value of 96.8%.

(Example 2)

Aside from an added amount of fluorinated polycarbonate being 5 parts by mass, conditions were the same as those of Example 1. The obtained foam was evenly foamed. The mean bubble diameter was very fine, at 0.6 micrometers. The thickness of the foam was 0.8 millimeters. The reflectivity of the foam sheet was a high value of 97.1%.

(Example 3)

Aside from fluorinated polycarbonate having a structure shown in Formula (2) below, conditions were the same as those of Example 1. The obtained foam was evenly foamed. The mean bubble diameter was very fine, at 0.6 micrometers. The thickness of the foam was 0.8 millimeters. The reflectivity of the foam sheet was a high value of 95.7%.

Formula 2

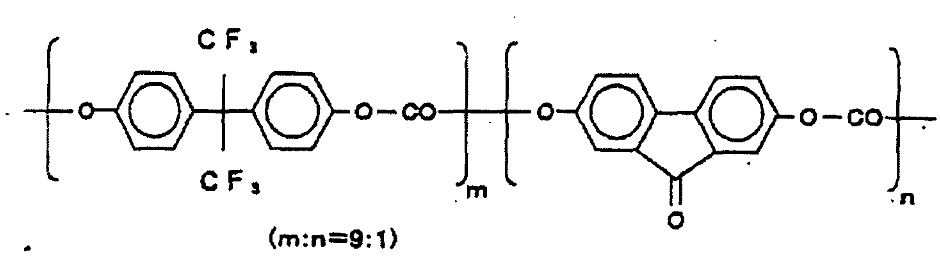

(m:n=9:1)

... (2)

(Comparative Example 1)

Aside from a simple substance of polycarbonate (grade: L1250, manufactured by Teijin Chemicals Limited) being formed into a sheet having a thickness of 0.5 mm, a width of 300 millimeters, and a length of 60 meters, conditions were the same as those of Example 1. Although the obtained foam has a favorable shape-retaining property, the mean bubble diameter is 14 micrometers. Therefore, the reflectivity was 87.9%.

(Comparative Example 2)

A pellet was formed by 0.03 parts by mass of calcium carbonate particles with a mean diameter of 0.23 micrometers being added to polycarbonate (grade: L1250, manufactured by Teij in Chemicals Limited) and mixed. The pellet was fed to an extruding machine heated to 280°C, and melt extrusion was performed. The pellet was discharged in a sheet shape by a T-die. The sheet was adhered to a cooling drum with a surface temperature of 25°C by electrostatic force. The sheet was cooled and hardened, thereby forming an unstretched cast film. The unstretched cast film was led to a tenter that grips both ends with clips. A first stage of stretching was performed by 1.8 times in a width direction at 120°C. A second stage of stretching was then performed by 2.5 times in the width direction at 100°C. The film was lead to a heated roll group and preheated to 100°C. The film was then stretched in the length direction by a draw ratio of 3 times. Then, the obtained film was lead to a tenter than grips both ends with clips and heat-treated at 150°C. A sheet with a thickness of 0.2 millimeters was obtained. Although the obtained sheet has a relatively high reflectivity of 93.7%, the shape-retaining property was very poor.

Sheet thickness, mean bubble diameter, specific gravity, expansion ratio, reflectivity, and shape-retaining property of the foam obtained by Examples 1 to 3 and Comparative Examples 1 and 2 are shown in Table 1.

Table 1

| | Thickness of sheet after foaming (mn) | Mean bubble diameter (μm) | Specific gravity | Expansion ratio (times) | Reflectivity (%) | Shape-retaining property |
|---|---|---|---|---|---|---|
| Example 1 | 0.8 | 0.7 | 0.33 | 3.8 | 96.8 | Good |
| Example 2 | 0.8 | 0.6 | 0.34 | 3.5 | 97.1 | Good |

(continued)

| | Thickness of sheet after foaming (mn) | Mean bubble diameter (μm) | Specific gravity | Expansion ratio (times) | Reflectivity (%) | Shape-retaining property |
|---|---|---|---|---|---|---|
| Example 3 | 0.8 | 0.8 | 0.31 | 3.9 | 95.7 | Good |
| Comparative Example 1 | 0.8 | 14 | 0.30 | 4.0 | 87.9 | Good |
| Comparative Example 2 | 0.2 | 0.5 | 0.60 | 2.0 | 93.7 | Poor |

## Claims

**1.** A polycarbonate foam wherein:

the polycarbonate foam is a resin sheet containing a polycarbonate (A) and a fluorinated polycarbonate (B) and has a plurality of pores with mean bubble diameter of 10 micrometers within.

**2.** The polycarbonate foam according to claim 1, wherein:

the fluorinated polycarbonate (B) is that in which a portion of or all hydrogen atoms of a polycarbonate are replaced with fluorine atoms.

**3.** The polycarbonate foam according to claim 1 or 2, wherein:

structures of the polycarbonate (A) and the fluorinated polycarbonate (B) are a same structure aside from a difference between the hydrogen atoms and fluorine atoms.

**4.** The polycarbonate foam according to any one of claims 1 to 3, wherein:

0.1 to 10 parts by mass of fluorinated polycarbonate (B) is added to 100 parts by mass of polycarbonate (A).

**5.** The polycarbonate foam according to any one of claims 1 to 4, wherein:

the polycarbonate foam is manufactured by a manufacturing method including
a step of holding the resin sheet containing the polycarbonate (A) and the fluorinated polycarbonate (B) in a pressurized inert gas atmosphere and incorporating the inert gas into the resin sheet and
a step of heating the resin sheet incorporated with the inert gas under ambient pressure and foaming the resin sheet.

[Fig. 1]

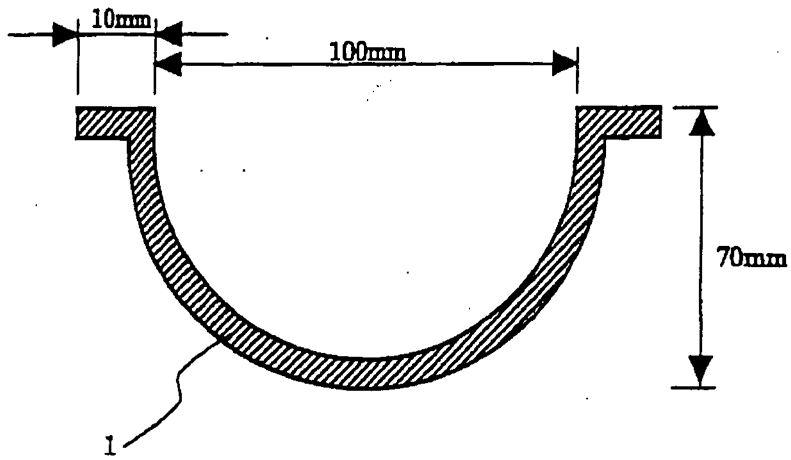

**INTERNATIONAL SEARCH REPORT**

International application No.
PCT/JP2006/325839

A. CLASSIFICATION OF SUBJECT MATTER
*C08J9/12*(2006.01)i, *C08L69/00*(2006.01)i

According to International Patent Classification (IPC) or to both national classification and IPC

B. FIELDS SEARCHED

Minimum documentation searched (classification system followed by classification symbols)
C08J9/04-9/14, C08L69/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 6-166768 A (Sekisui Plastics Co., Ltd.), 14 June, 1994 (14.06.94), Claims; Par. No. [0022]; example 4 (Family: none) | 1-5 |
| A | JP 7-330940 A (Asahi Chemical Industry Co., Ltd.), 19 December, 1995 (19.12.95), Claims; Par. No. [0013]; examples 1 to 5, 7 (Family: none) | 1-5 |
| A | JP 62-18501 A (Teijin Ltd.), 27 January, 1987 (27.01.87), Claims (Family: none) | 1-5 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 March, 2007 (02.03.07) | 13 March, 2007 (13.03.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2006/325839

C (Continuation). DOCUMENTS CONSIDERED TO BE RELEVANT

| Category* | Citation of document, with indication, where appropriate, of the relevant passages | Relevant to claim No. |
|---|---|---|
| A | JP 6-57026 A (The Furukawa Electric Co., Ltd.), 01 March, 1994 (01.03.94), Claims; Par. Nos. [0008] to [0012] (Family: none) | 1-5 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002122863 A
- WO 9701117 A
- JP HEISEI4296819 B